# EUROPÄISCHE PATENTSCHRIFT

(11) **EP 0 767 999 B1**
(45) Veröffentlichungstag und Bekanntmachung des Hinweises auf die Patenterteilung: **04.02.1998**
(21) Anmeldenummer: 95921718.3
(22) Anmeldetag: 21.06.1995
(51) Int. Cl.: H04N 1/00

(54) **STEUERUNG EINES AN EIN FAX-GERÄT ANGESCHLOSSENEN FERNSPRECHENDGERÄTES MITTELS EINER PC-FAX-KOPPLUNG**
METHOD OF CONTROLLING, BY PC-FAX LINK, A PHONE LINKED TO A FAX MACHINE
SYSTEME DE COMMANDE D'UN POSTE TELEPHONIQUE RACCORDE A UN TELECOPIEUR, A L'AIDE D'UNE LIAISON PC-FAX

(30) Priorität: 27.06.1994 DE 4422343
(43) Veröffentlichungstag der Anmeldung: 16.04.1997
(73) Patentinhaber: SIEMENS AKTIENGESELLSCHAFT, 80333 München (DE)
(72) Erfinder: HIRSCH, Lucian, D-81539 München (DE)
(86) Internationale Anmeldenummer: DE9500804
(87) Internationale Veröffentlichungsnummer: WO9600476

(56) Entgegenhaltungen:
- EP-A- 0 426 412
- EP-A- 0 630 141
- WO-A-90/10989
- WO-A-93/20647
- GB-A- 2 258 787
- TELCOM REPORT, Bd. 15, Nr. 1, 1.Januar 1992 Seiten 48-50, XP 000259065 SENDLINGER H 'UEBERTRAGEN, DRUCKEN UND SCANNEN MIT EINEM GERAT'

## Beschreibung

Im Zuge vermehrter Ausnutzung unterschiedlicher Kommunikationsdienste treten immer häufiger Arbeitsplätze auf, an denen neben einem Personal Computer auch ein Facsimile-Endgerät und ein Fernsprechendgerät vorhanden sind. Üblicherweise weist jedes dieser Kommunikationsendgeräte eine eigene Bedienoberfläche auf und wird unabhängig von den jeweils anderen Kommunikationsendgeräten desselben Arbeitsplatzes genutzt. Es ist allerdings auch bereits bekannt - DE-OS 41 06 454 - eine Nutzung der Bedienoberfläche und zusätzlicher Applikationen eines Personal Computers für die Kommunikation mit einem Facsimile-Endgerät zu nutzen.

Die Erfindung geht von diesem bekannten Kommunikations-Szenario aus und betrifft demgemäß ein Verfahren zur Steuerung der Kommunikation zwischen einem Personal Computer und einem über eine Schnittstelleneinrichtung mit diesem verbundenen Facsimile-Endgerät mit integrierter Kommunikationseinrichtung und mit einem angeschlossenen Fernsprechendgerät, mittels eines Arbeitsspeichers des Personal Computers zur Bedienung der Kopplung mit dem Facsimile-Endgerät und einer dem Personal Computer zugeordneten Bedienungseinheit, z.B. Tastatur, an der in Steuerkommandos für das Facsimile-Endgerät umsetzbare Kommandos eingebbar sind.

Die der Erfindung zugrundeliegende Aufgabe besteht darin, von diesem bekannten Verfahren ausgehend auch das Telefonieren unter Nutzung der Bedienoberfläche bzw. aus PC-Applikationen heraus möglich zu machen. Dies wird ausgehend von dem bekannten Verfahren dadurch erreicht, daß mittels der Bedienungseinrichtung zusätzliche Kommandos und Daten eingebbar sind, wobei die Kommandos in Sonder-Steuerkommandos zum Aufbau einer abgehenden Sprechverbindung des angeschlossenen Fernsprechendgerätes unter Einbeziehung der eingegebenen Daten mittels der Kommunikationseinrichtung umsetzbar sind.

Der Kern der Erfindung ist darin zu sehen, daß eine für die Interkommunikation des Personal Computers mit einem Facsimile-Endgerät genutzte PC-Fax-Kopplung zusätzlich auch für den Fernsprechdienst genutzt wird. Der besondere Vorteil, der mit der Erfindung verbunden ist, liegt darin, daß das Verfahren mit einem beliebigen Personal Computer durchgeführt werden kann, der über eine birektionale Schnittstelle mit einem Facsimile-Endgerät gekoppelt ist und daß keine zusätzlichen Einrichtungen (Steuermodule, Schnittstellenmodule) notwendig sind, um das erfindungsgemäße Verfahren zu realisieren. Insbesondere im Hinblick auf den in der Praxis zunehmenden Einsatz von PC-Fax-Kopplungen ist dies als besonderer Vorteil anzusehen. Im übrigen ist Aufbau und Funktion der PC-Fax-Schnittstelleneinrichtung an sich beliebig, d.h. daß sowohl bidirektionale serielle PC-Fax-Schnittstellen als auch bidirektionale parallele bzw. SCSI-Schnittstellen eingesetzt werden können.

Eine vorteilhafte Weiterbildung der Erfindung sieht vor, daß im Personal Computer ein die Verbindung mit dem Facsimile-Endgerät realisierendes Hintergrundprogramm implementiert ist. Das Hintergrundprogramm kann durch ein sogenannten Terminate-and-Stay-Resident-Programm (TSR), z.B. in einer Multitasking-Umgebung realisiert werden. Beim Einschalten des Personal Computers wird das Hintergrundprogramm gestartet und bleibt bei eingeschaltetem Personal Computer ständig im Hintergrund aktiv, ohne die laufenden Applikationen zu beeinträchtigen. Daraus ergibt sich der Vorteil, daß eine im Personal Computer aktive Applikation nicht geschlossen werden muß, um ein separates Kommunikationsprogramm aufzurufen, sondern daß ein für die Zwecke der Praxis ausreichend schnelles automatisches Wechseln zum Hintergrundprogramm möglich ist. Das Hintergrundprogramm steuert den Meldungs-und Datenaustausch im Personal Computer zwischen diesem und dem Facsimile-Endgerät über die Verbindung zwischen beiden. Dieses Hintergrundprogramm kann getrennt von dem aus der DE-OS 41 06 454 bekannten Hintergrundprogramm zur Übertragung von Facsimile-Nachrichten ausgebildet sein oder in dieses integriert sein. In letzterem Fall registriert es ebenfalls beim Facsimile-Endgerät eintreffende Facsimile-Nachrichten, gewährleistet eine ständige Empfangsbereitschaft und zeigt den Empfang der Facsimile-Nachrichten am Personal Computer an. Es können auch Sendeaufträge mit zeitverzögerten Sendezeitpunkt oder mit Wahlwiederholung abgearbeitet werden.

Die Nutzung der Kommunikationsfähigkeit des Hintergrundprogramms wird vorteilhafterweise dadurch eingeleitet, daß im Personal Computer ein mittels der Bedienungseinheit aufrufbares, von der PC-Fax-Kopplung unabhängiges Bedienungsprogramm implementiert ist. Mit diesem Bedienungsprogramm können z.B. aus einem im Arbeitsspeicher gespeicherten Telefonverzeichnis Rufnummern ermittelt und an die Kommunikationseinrichtung des Facsimile-Endgerätes abgegeben werden. Es kann hierbei für die Fax- und Telefonanwendungen getrennte Verzeichnisse oder Programmroutinen geben, oder die Fax- und Telefonfunktionen sind in einem Verzeichnis bzw. einem Bedienprogramm zusammengefaßt.

Selbstverständlich erlaubt das Bedienungsprogramm aber auch die Abgabe von Rufnummern, die mittels der Bedienungseinheit in den Personal Computer eingegeben sind. In diesem Zusammenhang ist es als besonders vorteilhaft anzusehen, wenn im Personal Computer ein Scan-Programm zum Abtasten des Bildschirmspeichers resident installiert ist, mittels dessen aus beliebigen PC-Applikationen die Umsetzung von mittels der Bedienungseinheit eingegebenen Rufnummern in entsprechende Zifferninformationen für die Kommunikationseinrichtung des Facsimile-Endgerätes erfolgt. Beispielsweise kann die Rufnummer an einer beliebigen Stelle aus einer beliebigen PC-Applikation heraus eingegeben werden. Durch die anschließende Betätigung einer Taste bzw. einer Tastenkombination an der Bedienungseinheit kann das im Hintergrund resident geladene Programm aktiviert werden, das den Bildschirmspeicher nach einer Ziffernkombination abtastet. In diesem Zusammenhang kann z.B. jede ausschließlich aus Ziffern bestehende Zeichenkette oder eine durch andere Merkmale eindeutig bezeichnete Zeichenkette, die sich zu diesem Zeitpunkt im Bildschirmspeicher befindet, als mögliche Rufnummer zur Auswahl angeboten werden; bei positiver Quittierung der richtigen Zeichenkette durch den Anwender, z.B. durch einen entsprechenden Tastendruck, wird diese Zeichenkette in Form eines entsprechenden fernsprechbezogenen Sonder-Steuerkommandos, das in einen Initialisierungsblock eingebettet ist, an die Kommunikationseinrichtung des Facsimile-Endgerätes abgegeben und damit ein Auftrag zum Aufbau einer Kommunikationsverbindung realisiert.

Eine besonders vorteilhafte Realisierung des erfindungsgemäßen Verfahrens sieht vor, daß die auf die PC-Fax-Kopplung bezogenen Steuerkommandos und die fernsprechbezogenen Sonder-Steuerkommandos in derselben Kommandosprache gebildet sind. Damit sind einerseits die entsprechenden Programme (Bedienungsprogramm, Hintergrundprogramm) im Personal Computer von Facsimile- und Fernsprechanwendungen gemeinschaftlich nutzbar, zum anderen ist die Bedienung der Fax-Kopplung und der Telefon-Kopplung im Hinblick auf die Gleichartigkeit der Kommandos erleichtert.

Die Unterscheidung zwischen einem Fax-Auftrag und einem Telefon-Auftrag erfolgt vorteilhafterweise derart, daß im Facsimile-Endgerät ein Interpreter-Programm implementiert ist, mittels dessen eine Unterscheidung zwischen Steuerkommandos und Sonder-Steuerkommandos erfolgt. Ist z.B. das Facsimile-Endgerät momentan nicht in Facsimile-Aktivitäten involviert, dann wird ein Telefonauftrag von einer "Auftragsverwaltung" des Facsimile-Endgerätes angenommen und die Kommunikationseinrichtung des Facsimile-Endgerätes im Sinne des Startens des fernsprechbezogenen Verbindungsaufbaus aktiviert. Eine weitere Vereinfachung der Bedienung des kombinierten Kommunikationsendgeräte-Systems kann dadurch erreicht werden, daß mittels der Kommunikationseinrichtung des Facsimile-Endgerätes während des Aufbaus einer abgehenden Sprechverbindung des Fernsprechendgerätes eine Lautsprecherfunktion im Facsimile-Endgerät aktiviert wird. Der Benutzer des Personal Computers kann also - beispielsweise in der laufenden Applikation-weiter in der Benutzung fortfahren, bis sich z.B. ein angerufener Teilnehmer meldet.

Die Erfindung wird im folgenden anhand eines schematisch dargestellten Ausführungsbeispiels erläutert.

Ein personal Computer PC mit einem Arbeitsspeicher AS, einer Bedienungseinheit in Form einer Tastatur T und einer im Hintergrund laufenden Kommunikationssoftware KP ist über eine Schnittstelleneinrichtung SE mit einem Facsimile-Endgerät Fax verbunden. Ein dem Facsimile-Endgerät Fax zugeordnetes Interpreterprogramm PC-I hat Zugriff auf die Verbindung zwischen Personal Computer PC und Facsimile-Endgerät Fax und ebenfalls auf eine Kommunikationseinrichtung KE, die ein Fernsprechendgerät FE mit einer Teilnehmerleitung ln, z.B. zum Zugang zu einem öffentlichen Kommunikationsnetz, vermitteln kann. Die schematisch dargestellte Schnittstelleneinrichtung SE ist als V24-Schnittstelle ausgebildet, eine RS232-Schnittstelle oder ähnliche sind ebenso einsetzbar. Die Schnittstelleneinrichtung SE ist unter schaltungstechnischen Aspekten gesehen jeweils als in den Personal Computer PC und das Facsimile-Endgerät Fax integriert anzusehen.

Es wird angenommen, daß eine Bedienungsperson mittels der Tastatur T des Personal Computers PC eine Telefonnummer aus einer PC-Fax-orientierten, im Arbeitsspeicher AS verfügbaren Datenbank auswählt. Diese Datenbank im Arbeitsspeicher AS ist vom PC-Anwender durch Neueinträge, Änderungen bzw. Löschen von Rufnummern frei gestaltbar. Die Bedienperson kann jedoch auch bei einer laufenden PC-Applikation z.B. einem Textverarbeitungsprogramm, eine Telefonnummer auswählen, indem nach Betätigen einer bestimmten Tastenkombination der Bildschirm nach einer zuvor eingegebene gültigen Telefonnummer abgesucht und die eingegebene Telefonnummer bestimmt wird.

Nach Ermittlung der gewünschten Rufnummer bildet die im Hintergrund am Personal Computer PC laufende Kommunikationssoftware KP anhand einer bestimmten Kombination von Parametern in einem Initialisierungsblock einen für ein Facsimile-Endgerät Fax eindeutig erkennbaren PC-Telefonauftrag. Die vom Benutzer eingegebene bzw. ausgewählte Rufnummer kann durch die Kommunikationssoftware KP in Abhängigkeit von dem Anschluß des Facsimile-Endgerätes Fax an einen Haupt- oder Nebenanschluß um das Amtsholungszeichen automatisch erweitert werden.

Der Initialisierungsblock umfaßt Angaben zur Quelle und Senke der Nachricht, wobei durch die Kennzeichnung der Nachrichtensenke, eine Unterscheidung zwischen einem örtlichen Facsimile-Endgerät Fax (z.B. beim Ausdrucken von Facsimile-Nachrichten), einem entfernten Facsimile-Endgerät (z.B. beim Versenden einer Facsimile-Nachricht) oder auch einem Fernsprechendgerät FE (z.B. zum Aufbau einer Fernsprechverbindung) vorgenommen werden kann. Der Initialisierungsblock enthält weitere Angaben, z.B. ob und wieviele Wahlwiederholungen gewünscht und in welchem zeitlichen Abstand sie gewünscht werden.

Das im Facsimile-Endgerät Fax laufende Interpreterprogramm PC-I wertet das vom Personal Computer'PC abgegebene SonderSteuerkommando im Initialisierungsblock aus und erkennt den Telefonauftrag. Anschließend wird der Auftrag von einer Auftragsverwaltung des Facsimile-Endgerätes Fax angenommen und die Kommunikationseinrichtung KE des Facsimile-Endgerätes Fax mit dem Verbindungsaufbau beauftragt. Zusätzlich wird die Lautsprecherfunktion im Facsimile-Endgerät Fax eingeschaltet; dem PC-Anwender ist damit eine akustische Kontrolle des Verbindungsaufbaus möglich. Es können jedoch auch Lautsprecherfunktionen des Personal Computers bzw. die Lautsprechenfunktionen des Fernsprechendgerätes FE genutzt werden. Wenn sich der angerufene Teilnehmer gemeldet hat, wird der Hörer des Fernsprechendgerätes FE vom PC-Benutzer abgenommen, und die Kommunikationseinrichtung KE des Facsimile-Endgerätes Fax schaltet die Verbindung durch.

Soll von einem entfernten Fernsprechendgerät ein Gesprächsaufbau zum Fernsprechendgerät FE des Facsimile-Endgerätes Fax erfolgen, nimmt die Kommunikationseinrichtung KE des örtlichen Facsimile-Endgerätes Fax den Gesprächswunsch entgegen und löst eine akustische Signalisierung zumindestens beim örtlichen Fernsprechendgerät FE, beim Facsimile-Endgeräte Fax selbst oder über Steuerkommandos zum Personal Computer PC auch dort aus.

Der Teilnehmer, d.h. Nutzer des Personal Computers PC kann beim Gesprächsaufbau auf eigenen Wunsch, unter Umständen mit automatischer Wahlwiederholung, den Hörer bis zum tatsächlichen Gesprächsbeginn aufgelegt lassen. Diese Tatsache erhöht den Komfort am PC-Arbeitsplatz erheblich.

Bei ankommenden Gesprächen kann das "Anklopfen", d.h. das Anzeigen eines fremden Gesprächswunsches während eines laufenden Ferngespräches, über den Personal Computer PC realisiert werden. Dazu erzeugt die Kommunikationseinrichtung KE des Facsimile-Endgerätes Fax ein Steuerkommando, das zum Personal Computer PC gesendet und vom Hintergrundprogramm des Personal Computers PC erkannt wird und zur optischen oder akustischen Anzeige des "Anklopfens" am Personal Computer PC führt.

Nach Beendigung des Gespräches bzw. dem Auflegen des Hörers am Fernsprechendgerät geht das Facsimile-Endgerät Fax in den normalen Facsimile-Betrieb über.

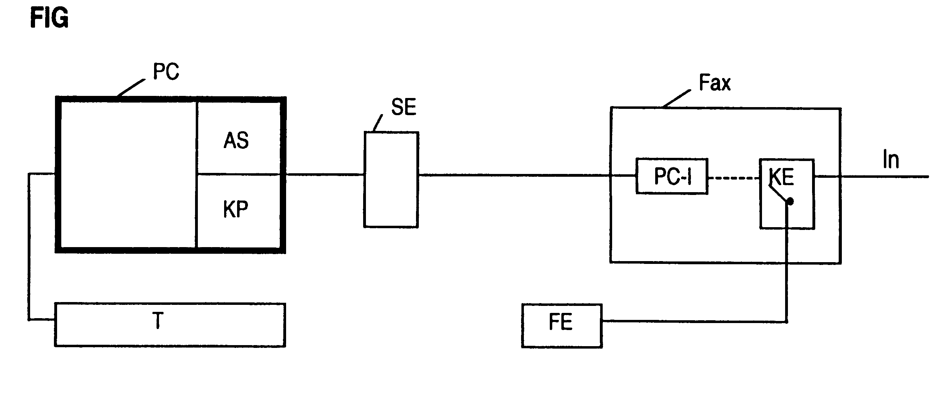

## Patentansprüche

1. Verfahren zur Steuerung der Kommunikation zwischen einem Personal Computer und einem über eine Schnittstelleneinrichtung mit diesem verbundenen Facsimile-Endgerät mit integrierter Kommunikationseinrichtung und mit einem angeschlossenen Fernsprechendgerät, mittels eines Arbeitsspeichers des Personal Computers zur Bedienung der Kopplung mit dem Facsimile-Endgerät und einer dem Personal Computer zugeordneten Bedienungseinheit, an der in Steuerkommandos für das Facsimile-Endgerät umsetzbare Kommandos eingebbar sind,
**dadurch gekennzeichnet,**
daß mittels der Bedienungseinheit (T) weitere Kommandos eingebbar sind, die in Sonder-Steuerkommandos zum Aufbau einer abgehenden Sprechverbindung des angeschlossenen Fernsprechendgerätes (FE) mittels der Kommunikationseinrichtung (KE) umsetzbar sind.

2. Verfahren nach Anspruch 1,
**dadurch gekennzeichnet,**
daß im Personal Computer (PC) ein die Verbindung mit dem Facsimile-Endgerät (Fax) realisierendes Hintergrundprogramm implementiert ist.

3. Verfahren nach Anspruch 1 oder 2,
**dadurch gekennzeichnet,**
daß im Personal Computer (PC) ein mittels der Bedienungseinheit (T) aufrufbares Bedienungsprogramm implementiert ist.

4. Verfahren nach Anspruch 3,
**dadurch gekennzeichnet,**
daß mittels des Bedienungsprogramms aus einem im Arbeitsspeicher (AS) gespeicherten Telefonverzeichnis Rufnummern ermittelbar und an die Kommunikationseinrichtung (KE) des Facsimile-Endgerätes (Fax) abgebbar sind.

5. Verfahren nach Anspruch 3 oder 4,
**dadurch gekennzeichnet,**
daß mittels des Bedienungsprogramms Rufnummern, die mittels der Bedienungseinheit (T) in den Personal Computern (PC) eingegeben sind, an die Kommunikationseinrichtung (KE) des Facsimile-Endgerätes (Fax) abgebbar sind.

6. Verfahren nach einem der Ansprüche 1 bis 5,
**dadurch gekennzeichnet,**
daß im Personal Computer (PC) ein Eingabe-Programm resident installiert ist, mittels dessen aus beliebigen PC-Applikationen die Umsetzung von mittels der Bedienungseinheit (T) eingegebenen Rufnummern in entsprechende Zifferninformationen für die Kommunikationseinrichtung (KE) des Facsimile-Endgerätes (Fax) erfolgt.

7. Verfahren nach einem der Ansprüche 1 bis 6,
**dadurch gekennzeichnet,**
daß die Steuerkommandos und die Sonder-Steuerkommandos in derselben Kommandosprache gebildet sind.

8. Verfahren nach Anspruch 7,
**dadurch gekennzeichnet,**
daß im Facsimile-Endgerät (Fax) ein Interpreter-Programm (PC-Interpreter) implementiert ist, mittels dessen eine Unterscheidung zwischen Steuerkommandos und Sonder-Steuerkommandos erfolgt.

9. Verfahren nach einem der Ansprüche 1 bis 8,
**dadurch gekennzeichnet,**
daß mittels der Kommunikationseinrichtung (KE) des Facsimile-Endgerätes (Fax) während des Aufbaus einer abgehenden Sprechverbindung des Fernsprechendgerätes (FE) eine Lautsprecherfunktion desselben aktiviert wird.

## Claims

1. Method of controlling the communication between a personal computer and a facsimile terminal, connected to the latter via an interface means and having an integrated communication means and a connected telephone terminal, by means of a main memory of the personal computer, for operating the link to the facsimile terminal, and a user control unit which is assigned to the personal computer and at which commands which can be converted into control commands for the facsimile terminal can be entered, characterized in that it is possible by means of the user control unit (T) to enter further commands, which are convertible into special control commands for establishing an outgoing voice link of the connected telephone terminal (FE) by means of the communication means (KE).

2. Method according to Claim 1, characterized in that a background program realizing the connection to the facsimile terminal (Fax) is implemented in the personal computer (PC).

3. Method according to Claim 1 or 2, characterized in that a user control program, which can be called up by means of the user control unit (T), is implemented in the personal computer (PC).

4. Method according to Claim 3, characterized in that the user control program can be used to determine call numbers from a telephone directory stored in the main memory (AS) and pass them to the communication means (KE) of the facsimile terminal (Fax).

5. Method according to Claim 3 or 4, characterized in that the user control program can be used to pass to the communication means (KE) of the facsimile terminal (Fax) call numbers which have been entered into the personal computer (PC) by means of the user control unit (T).

6. Method according to one of Claims 1 to 5, characterized in that there is installed as resident in the personal computer (PC) an input program, by means of which call numbers entered by means of the user control unit (T) are converted from any desired PC application into corresponding numerical information for the communication means (KE) of the facsimile terminal (Fax).

7. Method according to one of Claims 1 to 6, characterized in that the control commands and the special control commands are formed in the same command language.

8. Method according to Claim 7, characterized in that there is implemented in the facsimile terminal (Fax) an interpreter program (PC-Interpreter), by means of which a distinction between control commands and special control commands takes place.

9. Method according to one of Claims 1 to 8, characterized in that a loudspeaker function of the telephone terminal (FE) is activated by means of the communication means (KE) of the facsimile terminal (Fax) during the establishment of an outgoing voice link of said telephone terminal.

## Revendications

1. Procédé de commande de la communication entre un ordinateur personnel et un terminal de télécopie qui y est relié par l'intermédiaire d'un dispositif d'interface, qui comporte un dispositif de communication intégré et auquel est raccordé un terminal téléphonique, au moyen d'une mémoire de travail de l'ordinateur personnel servant à opérer la liaison avec le terminal de télécopie et d'une unité d'utilisation associée à l'ordinateur personnel, sur laquelle des instructions pouvant être converties en instructions de commande destinées au terminal de télécopie peuvent être entrées, caractérisé en ce que, au moyen de l'unité (T) d'utilisation, on peut entrer des instructions supplémentaires, qui, au moyen du dispositif (KE) de communication peuvent être converties en instructions de commande spéciales servant à établir une liaison téléphonique qui part du terminal (FE) téléphonique raccordé.

2. Procédé suivant la revendication 1, caractérisé en ce qu'il est mis en oeuvre dans l'ordinateur (PC) personnel un programme d'arrière-plan réalisant la liaison avec le terminal (Fax) de télécopie.

3. Procédé suivant la revendication 1 ou 2, caractérisé en qu'il est mis en oeuvre dans le terminal (PC) personnel un programme d'utilisation pouvant être appelé au moyen de l'unité (T) d'utilisation.

4. Procédé suivant la revendication 3, caractérisé en ce que, au moyen du programme d'utilisation, à partir d'un répertoire téléphonique enregistré dans la mémoire (AS) de travail, on peut déterminer des numéros d'appel et les fournir au dispositif (KE) de communication du terminal (Fax) de télécopie.

5. Procédé suivant la revendication 3 ou 4, caractérisé en ce que, au moyen du programme d'utilisation, on peut fournir au dispositif (KE) de communication du terminal (Fax) de télécopie des numéros d'appel qui sont entrés dans l'ordinateur (PC) personnel au moyen de l'unité (T) d'utilisation.

6. Procédé suivant l'une des revendications 1 à 5, caractérisé en ce qu'il est installé de manière résidente dans l'ordinateur (PC) personnel un programme d'entrée, au moyen duquel, à partir d'applications d'ordinateur personnel quelconque, il s'effectue la conversion de numéros d'appel entrés au moyen de l'unité (T) d'utilisation en informations chiffrées correspondantes destinées au dispositif KE de communication du terminal (Fax) de télécopie.

7. Procédé suivant l'une des revendications 1 à 6, caractérisé en ce que les instructions de commande et les instructions de commande spéciales sont formées dans le même langage de commande.

8. Procédé suivant la revendication 7, caractérisé en ce qu'il est mis en oeuvre dans le terminal (Fax) de télécopie un programme d'interpréteur (interpréteur d'ordinateur personnel), au moyen duquel s'effectue une distinction entre instructions de commande et instructions de commande spéciales.

9. Procédé suivant l'une des revendications 1 à 8, caractérisé en ce que, au moyen du dispositif (KE) de communication du terminal (Fax) de télécopie, il est activé pendant l'établissement d'une liaison téléphonique qui part du terminal (FE) téléphonique une fonction de haut-parleur de ce terminal téléphonique.
